# EUROPEAN PATENT APPLICATION

(11) **EP 3 604 021 A1**
(43) Date of publication of application: **05.02.2020**
(21) Application number: 17912660.2
(22) Date of filing: 15.12.2017
(51) Int. Cl.: B60L 5/30

(54) **LIFTING DEVICE FOR CURRENT COLLECTOR**

(30) Priority: 06.06.2017 CN 201710418667
(71) Applicant: CRRC Zhuzhou Locomotive Co., Ltd., Zhuzhou, Hunan 412001 (CN)
(72) Inventor: ZHANG, Haifeng, Zhuzhou Hunan 412001 (CN); ZHANG, Yanlin, Zhuzhou Hunan 412001 (CN); CHEN, Mingguo, Zhuzhou Hunan 412001 (CN); PENG, Baolin, Zhuzhou Hunan 412001 (CN); ZHOU, Jie, Zhuzhou Hunan 412001 (CN); GUO, Jinyu, Zhuzhou Hunan 412001 (CN); CHEN, Minjian, Zhuzhou Hunan 412001 (CN); LI, Jun, Zhuzhou Hunan 412001 (CN); SUN, Ning, Zhuzhou Hunan 412001 (CN); WANG, Qiuhong, Zhuzhou Hunan 412001 (CN)
(74) Representative: Mewburn Ellis LLP
(86) International application number: PCT/CN2017/116376
(87) International publication number: WO 2018/223653

(57) **Abstract**

A lifting device for a current collector comprises: a base plate (10); a four-bar linkage mechanism (2) capable of raising or lowering the current collector, wherein a frame of the four-bar linkage mechanism (2) is disposed on the base plate (10); a first driving member (3) capable of rotating a crank of the four-bar linkage mechanism (2) in a shoe-lowering direction; a first elastic member (1) having an elastic force for rotating the crank in a shoe-lifting direction, wherein one end of the first elastic member (1) is disposed on the base plate (10) and the other end is connected to the crank; a position-limiting member capable of maintaining the four-bar linkage mechanism (2) in a shoe-lowering position; a second elastic member (5) having an elastic force for locking the four-bar linkage mechanism (2) inside the position-limiting member, wherein one end of the second elastic member (5) is fixed, and the other end is connected to the position-limiting member; and a second driving member (4) capable of driving the position-limiting member to release the four-bar linkage mechanism (2). In the lifting device for a current collector, the first driving member (3), the second driving member (4), the first elastic member (1), the second elastic member (5), and the position-limiting member work together to lift or lower the four-bar linkage mechanism (2), so as to lift and lower the shoe of the current collector, thereby meeting requirements of an electrical device to lift or lower a shoe.

## Description

The application claims the priority to Chinese Patent Application No. 201710418667.7 titled "LIFTING DEVICE FOR CURRENT COLLECTOR", filed with the China National Intellectual Property Administration on June 6, 2017, which is incorporated herein by reference in its entirety.

### FIELD

The present application relates to the technical field of current collectors, and in particular to a lifting device for a current collector.

### BACKGROUND

At present, under an action of a spring force, a current collector for a maglev train employs a four-bar linkage mechanism to achieve raising the current collector, which cannot meet the lowering requirements under some situations such as a case that a main circuit is required to be isolated.

In summary, a technical problem to be addressed by those skilled in the art is to realize raising and lowering of the current collector.

### SUMMARY

In view of this, an object of the present application is to provide a lifting device for a current collector, so as to realize raising and lowering of the current collector.

In order to achieve the above object, the following technical solutions are provided according to the present application.

A lifting device for a current collector is provided, including:
a baseplate;
a four-bar linkage mechanism configured for driving the current collector to rise and fall, wherein a frame of the four-bar linkage mechanism is arranged at the baseplate;
a first driving member configured for driving a crank of the four-bar linkage mechanism to rotate in a direction for lowering the current collector;
a first elastic member having an elastic force for driving the crank to rotate in a direction for raising the current collector, wherein the first elastic member has one end arranged at the baseplate and another end connected to the crank;
a position-limiting member configured for limiting the four-bar linkage mechanism to a position where the current collector is lowered;
a second elastic member having an elastic force for locking the four-bar linkage mechanism in the position-limiting member, wherein one end of the second elastic member is fixed, and another end of the second elastic member is connected to the position-limiting member; and
a second driving member configured for driving the position-limiting member to release the four-bar linkage mechanism.

Preferably, in the lifting device for the current collector, a rotating shaft of the crank is fixedly connected to a twistable protrusion, and the first driving member has a first telescopic driving shaft configured for driving the twistable protrusion to twist in the direction for lowering the current collector.

Preferably, in the lifting device for the current collector, the first driving member is a lowering cylinder.

Preferably, in the lifting device for the current collector, the first elastic member is a first spring, and an axis of the first spring is parallel to an axis of the first telescopic driving shaft.

Preferably, in the lifting device for the current collector, the rotating shaft of the crank is fixedly connected to a driven twistable protrusion, and the first spring is connected to the driven twistable protrusion.

Preferably, in the lifting device for the current collector, a connecting bar of the four-bar linkage mechanism is provided with a positioning shaft, and the position-limiting member is configured to lock the positioning shaft.

Preferably, in the above lifting device for the current collector, the position-limiting member is a locking hook, a bottom end of the locking hook is hinged to the baseplate, and a top end of the locking hook is able to hook the positioning shaft.

Preferably, in the above lifting device for the current collector, the second elastic member is a second spring, and the second spring is connected to a middle portion of the locking hook; and the second driving member has a second telescopic driving shaft configured for driving the locking hook to rotate in a direction of releasing the positioning shaft.

Preferably, in the lifting device for the current collector, the second driving member is an unlocking cylinder, and an end of the second spring away from the locking hook is fixed to the unlocking cylinder.

Preferably, the lifting device for the current collector further includes:
an insulating bar arranged at the four-bar linkage mechanism, wherein the insulating bar is provided with a metal member;
an insulating bracket arranged at the baseplate; and
a position sensing switch arranged at the insulating bracket, wherein the position sensing switch is able to sense the metal member in a case that the four-bar linkage mechanism is at the position where the current collector is lowered.

As can be seen from the above technical solutions, the lifting device for the current collector provided according to the present application includes a baseplate; a four-bar linkage mechanism configured for driving the current collector to lift and lower, wherein a frame of the four-bar linkage mechanism is arranged at the baseplate; a first driving member configured for driving a crank of the four-bar linkage mechanism to rotate in a direction for lowering the current collector ; a first elastic member having an elastic force for driving the crank to rotate in a direction for raising the current collector, wherein the first elastic member has one end arranged at the baseplate and another end connected to the crank; a position-limiting member configured for limiting the four-bar linkage mechanism to a position where the current collector is lowered; a second elastic member having an elastic force for locking the four-bar linkage mechanism in the position-limiting member, wherein one end of the second elastic member is fixed, and another end of the second elastic member is connected to the position-limiting member; and a second driving member configured for driving the position-limiting member to release the four-bar linkage mechanism.

In a case that the current collector is required to be lowered, the crank of the four-bar linkage mechanism is driven by the first driving member to rotate in the direction for lowering the current collector, and the first elastic member is deformed by force; when the crank is rotated to the position where the current collector is lowered, the four-bar linkage mechanism is locked in the position-limiting member, and is held at a locked position by the elastic force of the second elastic member, thereby realizing lowering of the current collector. In a case that the current collector is required to be raised, the driving force of the first driving member is released, and the elastic force of the second elastic member is overcome by the second driving member, so as to drive the position-limiting member to release the four-bar linkage mechanism, thus, under the elastic restoring force of the first elastic member, the crank is rotated back to the position where the current collector is raised, thereby realizing raising of the current collector, at this time, the driving force of the second driving member is released, and the position-limiting member automatically returns under the acting force of the second elastic member.

In summary, according to the present application, the raising and lowering of the four-bar linkage mechanism is achieved by cooperation of the first driving member, the second driving member, the first elastic member, the second elastic member and the position-limiting member, thereby realizing raising and lowering of the current collector, and meeting the requirements of raising and lowering for electrical equipment.

### BRIEF DESCRIPTION OF THE DRAWINGS

Figure 1 is a front view showing a lifting device for a current collector according to an embodiment of the present application located at a position where the current collector is lowered;
Figure 2 is a top view showing the lifting device for the current collector according to the embodiment of the present application located at the position where the current collector is lowered; and
Figure 3 is a front view showing the lifting device for the current collector according to the embodiment of the present application located at a where the current collector is raised.

### DETAILED DESCRIPTION

A lifting device for a current collector is provided according to an embodiment of the present application, to realize -raising and lowering of the current collector.

The technical solution according to the embodiments of the present application will be described clearly and completely as follows in conjunction with the accompany drawings in the embodiments of the present application, so that purposes, technical solutions and advantages of the present application can be more clear. It is obvious that the described embodiments are only a part of the embodiments according to the present application, rather than all of the embodiments. All the other embodiments obtained by those skilled in the art based on the embodiments in the present application without any creative work belong to the scope of protection of the present application.

The lifting device for the current collector according to the present application includes: a baseplate 10; a four-bar linkage mechanism 2 configured for driving the current collector to rise and fall, wherein a frame of the four-bar linkage mechanism 2 is arranged at the baseplate 10; a first driving member 3 configured for driving a crank of the four-bar linkage mechanism 2 to rotate in a direction for lowering the current collector; a first elastic member 1 having an elastic force for driving the crank to rotate in a direction for raising the current collector, wherein the first elastic member 1 has one end arranged at the baseplate 10 and another end connected to the crank; a position-limiting member configured for limiting the four-bar linkage mechanism 10 to a position where the current collector is lowered; a second elastic member 5 having an elastic force for locking the four-bar linkage mechanism 2 in the position-limiting member, wherein one end of the second elastic member 5 is fixed, and another end of the second elastic member 5 is connected to the position-limiting member; and a second driving member 4 configured for driving the position-limiting member to release the four-bar linkage mechanism 2.

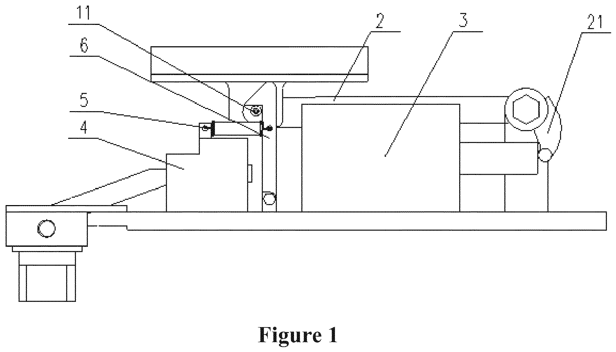

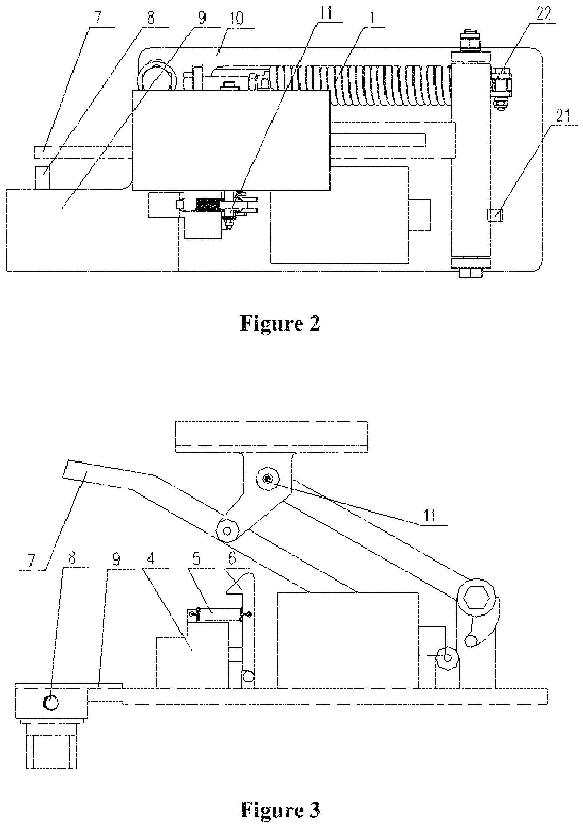

In a case that the current collector is required to be lowered, the crank of the four-bar linkage mechanism 2 is driven by the first driving member 3 to rotate in the direction for lowering the current collector (that is, a counterclockwise direction in Figure 3), and the first elastic member 1 is deformed by force; when the crank is rotated to the position where the current collector is lowered, the four-bar linkage mechanism 2 is locked in the position-limiting member, and is held at a locked position by the elastic force of the second elastic member 5, as shown in Figures 1 and 2, thereby realizing lowering of the current collector. In a case that the current collector is required to be raised, the driving force of the first driving member 3 is released, and the elastic force of the second elastic member 5 is overcome by the second driving member 4, so as to drive the position-limiting member to release the four-bar linkage mechanism 2, thus, under the elastic restoring force of the first elastic member 1, the crank is rotated back to the position where the current collector is raised, back to a state shown in Figure 3, thereby realizing raising of the current collector, and at this time, the driving force of the second driving member 4 is released, and the position-limiting member automatically returns to the position under the force of the second elastic member 5.

In summary, according to the present application, the raising and lowering of the four-bar linkage mechanism 2 is achieved by cooperation of the first driving member 3, the second driving member 4, the first elastic member 1, the second elastic member 5 and the position-limiting member, thereby realizing raising and lowering of the current collector, and meeting the requirements of raising and lowering for electrical equipment.

In a specific embodiment of the present application, a rotating shaft of the crank is fixedly connected to a twistable protrusion 21, and the first driving member 3 has a first telescopic driving shaft configured for driving the twistable protrusion 21 to twist in the direction for lowering the current collector. According to the present application, the twistable protrusion 21 is driven to twist by linear motion of the first telescopic driving shaft, thereby achieving counterclockwise rotation of the crank. Since a force arm of the twistable protrusion 21 is long, a driving force required to be applied is reduced. Of course, the first driving member 3 can also employ other structures, such as a motor, and the crank can be directly driven to rotate by a rotating shaft of the motor.

Further, the first driving member 3 is a lowering cylinder. According to the present application, the twistable protrusion 21 is driven to twist by the cylinder, which has a simple structure and is convenient for installation. Alternatively, the first driving member 3 may also be an electric push bar.

Preferably, the first elastic member 1 is a first spring, and an axis of the first spring is parallel to an axis of the first telescopic driving shaft. The spring has a large elastic force, which ensures good stability of the raising. Of course, the first elastic member 1 may also be a torsion spring sleeved on the rotating shaft of the crank.

In the lifting device for the current collector provided in the above embodiment, the rotating shaft of the crank is fixedly connected to a driven twistable protrusion 22, and the first spring is connected to the driven twistable protrusion 22. As shown in Figure 1, in a case that a driving shaft of the lowering cylinder is extended, the twistable protrusion 21 is pushed to move rightward, and the driven twistable protrusion 22 is also driven to move rightward, thereby the first spring is elongated; in a case that the driving shaft of the lowering cylinder is retracted, the driven twistable protrusion 22 together with the twistable protrusion 21 are driven to return by a retracting force of the first spring. According to the present application, the first spring and the lowering cylinder are connected to the driven twistable protrusion 22 and the twistable protrusion 21, respectively, to facilitate the arrangement of the structure. Of course, the above driven twistable protrusion 22 may also not be provided according to the present application, in a case that the twistable protrusion 21 is lengthened in an axial direction thereof, to allow the first spring to be directly connected to the twistable protrusion 21, an effect that the first spring is directly linked with the twistable protrusion 21 can also be achieved.

In order to facilitate locking of the four-bar linkage mechanism 2, a connecting bar of the four-bar linkage mechanism 2 is provided with a positioning shaft 11, and the position-limiting member is able to lock the positioning shaft 11. According to the present application, the connecting bar at a top portion is locked by a manner of locking the positioning shaft 11 through the position-limiting member, thereby achieving locking the four-bar linkage mechanism 2, and obtaining better locking strength. The positioning shaft 11 may also be arranged at a link of the four-bar linkage mechanism 2 connected to the frame. The four-bar linkage mechanism 2 may not be provided with the positioning shaft 11, instead, the four-bar linkage mechanism 2 may be provided with a positioning protrusion or a positioning locking plate.

Further, the position-limiting member is a locking hook 6, a bottom end of the locking hook 6 is hinged to the baseplate 10, and a top end of the locking hook 6 is able to hook the positioning shaft 11. In this embodiment, under an action of the second elastic member, the positioning shaft 11 is locked by the locking hook 6, and the locking hook 6 is driven by the second driving member 4 to rotate around a hinge point at the bottom end, thereby achieving the release of the positioning shaft 11, and the structure is simple. Of course, the position-limiting member may also be a clamping plate arranged in a horizontal direction, and the clamping plate can be tightened downward in a vertical direction by the elastic force of the second elastic member, thereby achieving a same effect of locking the positioning shaft.

The second elastic member 5 is a second spring, and the second spring is connected to a middle portion of the locking hook 6. The spring has a large elastic force, which ensures good locking strength. Of course, the second elastic member 5 may also be a leaf spring or a torsion spring sleeved on an articulated shaft at the bottom end of the locking hook 6.

The second driving member 4 has a second telescopic driving shaft configured for driving the locking hook 6 to rotate in a direction of releasing the positioning shaft 11. According to the present application, the locking hook 6 is driven to rotate in the direction of releasing the positioning shaft 11, that is, a clockwise direction in Figure 3, by linear motion of the second telescopic driving shaft, to make the locking hook 6 release a constraint on the positioning shaft 11. Since a force arm is long, a driving force required to be applied is reduced. Of course, the second driving member 4 may also employ other structures, such as a motor, and the locking hook 6 can be directly driven to rotate by a rotating shaft of the motor.

The second driving member is an unlocking cylinder, and an end of the second spring away from the locking hook is fixed to the unlocking cylinder. According to the present application, the locking hook 6 is driven to rotate by the cylinder, which has a simple structure and is convenient for installation. Alternatively, the second driving member 4 may be an electric push bar.

In order to further optimize the above technical solutions, the lifting device for the current collector further includes: an insulating bar 7 arranged at the four-bar linkage mechanism 2, wherein the insulating bar 7 is provided with a metal member; an insulating bracket 9 arranged at the baseplate 10; and a position sensing switch 8 arranged at the insulating bracket 9, wherein the position sensing switch 8 is able to sense the metal member in a case that the four-bar linkage mechanism 2 is at the position where the current collector is lowered. When the current collector is lowered to a desired lowered position, the metal member on the insulating bar 7 is close to the position sensing switch 8, the position sensing switch 8 is closed, and a signal is sent, thereby realizing position detection of the lowering. When the current collector is raised to a desired raised position, the metal member on the insulating bar 7 is away from the position sensing switch 8, the position sensing switch 8 is disconnected, and a signal is sent, thereby realizing position detection of the raising, thus, a position state of the current collector can be automatically obtained, and a driver can accurately determine whether the current collector is raised or lowered to the corresponding desired position. Alternatively, according to the present application, the same effect of determining whether the current collector is raised or lowered to the corresponding desired position may also be realized through a sensor directly detecting the position of the current collector.

The above embodiments in this specification are described in a progressive manner. Each of the embodiments is mainly focused on describing its differences from other embodiments, and references may be made among these embodiments with respect to the same or similar portions among these embodiments.

Based on the above description of the disclosed embodiments, those skilled in the art are capable of carrying out or using the present application. It is obvious for those skilled in the art to make many modifications to these embodiments. The general principle defined herein may be applied to other embodiments without departing from the spirit or scope of the present application. Therefore, the present application is not limited to the embodiments illustrated herein, but should be defined by the broadest scope consistent with the principle and novel features disclosed herein.

## Claims

1. A lifting device for a current collector, comprising:
a baseplate (10);
a four-bar linkage mechanism (2) configured for driving the current collector to rise and fall, wherein a frame of the four-bar linkage mechanism (2) is arranged at the baseplate (10);
a first driving member (3) configured for driving a crank of the four-bar linkage mechanism (2) to rotate in a direction for lowering the current collector;
a first elastic member (1) having an elastic force for driving the crank to rotate in a direction for raising the current collector, wherein one end of the first elastic member (1) is arranged at the baseplate (10), and another end of the first elastic member (1) is connected to the crank;
a position-limiting member configured for limiting the four-bar linkage mechanism (2) to a position where the current collector is lowered;
a second elastic member (5) having an elastic force for locking the four-bar linkage mechanism (2) in the position-limiting member, wherein one end of the second elastic member (5) is fixed, and another end of the second elastic member (5) is connected to the position-limiting member; and
a second driving member (4) configured for driving the position-limiting member to release the four-bar linkage mechanism (2).

2. The lifting device for the current collector according to claim 1, wherein a rotating shaft of the crank is fixedly connected to a twistable protrusion (21), and the first driving member (3) has a first telescopic driving shaft configured for driving the twistable protrusion (21) to twist in the direction for lowering the current collector.

3. The lifting device for the current collector according to claim 2, wherein the first driving member (3) is a lowering cylinder.

4. The lifting device for the current collector according to claim 2, wherein the first elastic member (1) is a first spring, and an axis of the first spring is parallel to an axis of the first telescopic driving shaft.

5. The lifting device for the current collector according to claim 4, wherein the rotating shaft of the crank is fixedly connected to a driven twistable protrusion (22), and the first spring is connected to the driven twistable protrusion (22).

6. The lifting device for the current collector according to claim 1, wherein a connecting bar of the four-bar linkage mechanism (2) is provided with a positioning shaft (11), and the position-limiting member is configured to lock the positioning shaft (11).

7. The lifting device for the current collector according to claim 6, wherein the position-limiting member is a locking hook (6), a bottom end of the locking hook (6) is hinged to the baseplate (10), and a top end of the locking hook (6) is allowed to hook the positioning shaft (11).

8. The lifting device for the current collector according to claim 7, wherein
the second elastic member (5) is a second spring, and the second spring is connected to a middle portion of the locking hook (6); and
the second driving member (4) has a second telescopic driving shaft configured for driving the locking hook (6) to rotate in a direction of releasing the positioning shaft (11).

9. The lifting device for the current collector according to claim 8, wherein the second driving member (4) is an unlocking cylinder, and an end of the second spring away from the locking hook (6) is fixed to the unlocking cylinder.

10. The lifting device for the current collector according to any one of claims 1 to 9, further comprising:
an insulating bar (7) arranged at the four-bar linkage mechanism (2), wherein the insulating bar (7) is provided with a metal member;
an insulating bracket (9) arranged at the baseplate (10); and
a position sensing switch (8) arranged at the insulating bracket (9), wherein the position sensing switch (8) is allowed to sense the metal member in a case that the four-bar linkage mechanism (2) is at the position where the current collector is lowered.
